# FASCICULE DE BREVET EUROPEEN

(11) **EP 3 259 189 B1**
(45) Date de publication et mention de la délivrance du brevet: **18.07.2018**
(21) Numéro de dépôt: 16733161.0
(22) Date de dépôt: 01.06.2016
(51) Int. Cl.: B64G 1/22, B64G 1/50, B64G 1/10, B64G 1/42, B64G 1/58

(54) **SATELLITE ARTIFICIEL**
KÜNSTLICHER SATELLIT
ARTIFICIAL SATELLITE

(30) Priorité: 02.06.2015 FR 1555013
(43) Date de publication de la demande: 27.12.2017
(73) Titulaire: Airbus Defence and Space SAS, 78130 Les Mureaux (FR)
(72) Inventeur: WALKER, Andrew, 31402 Toulouse (FR)
(74) Mandataire: Cabinet Plasseraud
(86) Numéro de dépôt international: PCT/FR2016/051307
(87) Numéro de publication internationale: WO 2016/193618

(56) Documents cités:
- EP-A1- 0 647 559
- EP-A1- 0 966 051
- EP-A1- 2 530 366
- FR-A1- 2 811 963
- US-A1- 2014 110 531

## Description

La présente invention se situe dans le domaine des satellites artificiels, et en particulier dans le domaine des satellites géostationnaires.

En particulier, la présente invention concerne le contrôle thermique d'un satellite.

Les satellites comprennent des équipements tels que des accumulateurs, une charge utile, un ordinateur de bord, etc... Un tel satellite est connu de US 2014/110531, qui est considéré comme l'art antérieur le plus proche et décrit les caractéristiques du préambule de la revendication 1. Ces équipements doivent être contrôlés thermiquement afin d'en assurer leur bon fonctionnement et ainsi assurer que le satellite considéré puisse effectuer sa mission avec succès. Ces équipements ayant des plages de température de fonctionnement différentes, on les isole dans des zones thermiques compatibles de leurs températures de fonctionnement. Ces zones sont entourées d'un matelas super isolant et au contact thermique d'un radiateur. Afin de simplifier la mise en oeuvre d'une telle isolation, on regroupe en général dans une même zone des équipements ayant des plages de température de fonctionnement proches. Les zones isothermes qui doivent être maintenues aux températures les plus froides nécessitent des radiateurs de plus grande taille. Ces radiateurs sont encombrants et alourdissent le satellite. Les constructeurs de satellites aménagent donc le minimum d'équipements dans les zones les plus froides.

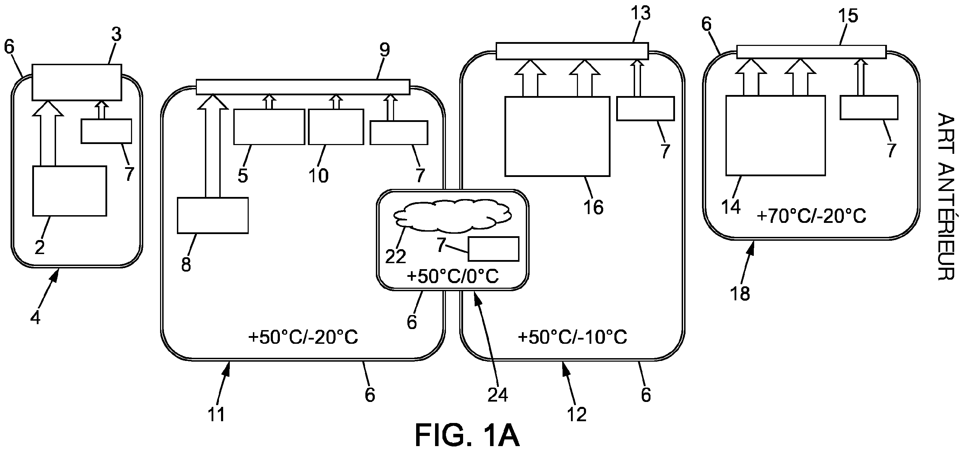

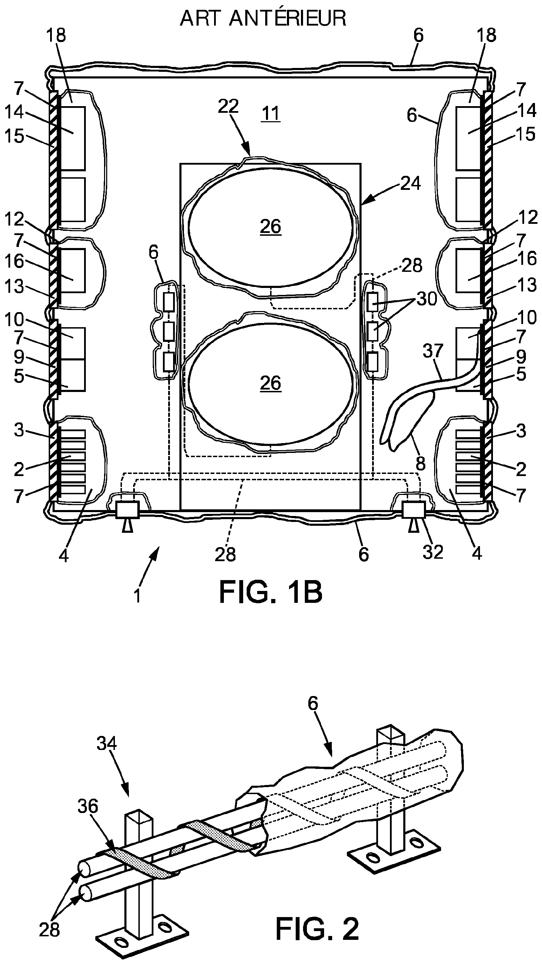

Les figures 1A et 1B illustrent schématiquement un exemple d'un agencement de zones isothermes dans un satellite 1. Selon cet exemple, le satellite 1 comporte cinq types de zones isothermes. Chaque zone isotherme est délimitée par un matelas super isolant 6 et éventuellement par un radiateur. Chaque zone isotherme comporte en outre un équipement de chauffage 7.

Ainsi, un premier type de zone isotherme 4 comprend un ensemble de batteries 2 et un premier radiateur 3. Lorsque les batteries 2 sont des batteries NiH, le premier type de zone 4 est maintenue à des températures comprises entre -20°C et -10°C. Lorsque les batteries 2 sont des batteries Lithium-Ion, le premier type de zone 4 est maintenue à des températures comprises entre +10°C et +30°C.

Un deuxième type de zone isotherme 11 comporte des roues de réaction 8, un ordinateur de bord 5, un bloc d'alimentation électrique 10 et un deuxième radiateur 9. Ce deuxième type de zone isotherme 11 est maintenue à une température comprise entre -20°C et +50°C.

Un troisième type de zone isotherme 12 comporte la charge utile 16 fonctionnant à basse puissance et un troisième radiateur 13. Ce troisième type de zone isotherme 12 est maintenue à des températures comprises entre -10°C et +50°C.

Un quatrième type de zone 18 comporte la charge utile 14 fonctionnant à haute puissance et un quatrième radiateur 15. Ce quatrième type de zone 18 est maintenue à une température comprise entre -20°C et +70°C.

Enfin, le système de stockage et de distribution d'ergol 22 est disposé dans un cinquième type de zone, dite zone de propulsion 24. Dans la présente invention, nous utiliserons la dénomination « ergol » pour désigner indistinctement la matière utilisée à des fins de propulsion, avec une propulsion de type chimique ou plasmique. Cette zone de propulsion maintenue à une température comprise entre 0°C et +50°C. La mise en place de cette zone de propulsion 24 est particulièrement longue et coûteuse. Au cours de cette mise en place, des chaufferettes sont collées sur les réservoirs 26, sur les valves et les filtres 30. Un matelas super isolant 6 est ensuite disposé autour de chacun de ces équipements et sur une partie des tuyères 32. Enfin, des chaufferettes sont disposées tout le long des conduites 28 de distribution d'ergol selon un agencement hélicoïdal, comme visible sur la figure 2. Des bandes adhésives 36 en aluminium sont collées sur les chaufferettes. Un matelas super isolant 6 est ensuite agencé autour des conduites 34. Les chaufferettes sont mises en fonctionnement pour que l'ergol ne gèle pas. Le matelas super isolant permet de minimiser la puissance de chauffe nécessaire au réchauffement de l'ergol réduisant ainsi la consommation électrique.

Toutefois, le montage des chaufferettes, des bandes et du matelas super isolant est réalisé manuellement sur l'ensemble des conduites entre les réservoirs et les tuyères. Ce montage est donc très long. De plus, les supports 34 portant les conduites 28 sont réalisés dans des matériaux à faible conductivité thermique qui sont coûteux.

Le but de la présente invention est d'offrir une solution de contrôle thermique de l'ensemble des équipements d'un satellite qui soit plus simple à mettre en oeuvre car offrant une plus grande liberté dans l'aménagement des équipements (par exemple emplacement, orientation) du satellite, tout en demeurant efficace, permettant ainsi de réduire la durée et les coûts de fabrication d'un satellite

A cet effet, l'invention a pour objet un satellite artificiel comprenant au moins un accumulateur propre à dissiper de la chaleur, au moins un radiateur propre à évacuer vers l'espace la chaleur dissipée par l'accumulateur, et au moins un équipement dit peu dissipatif qui possède une densité de puissance surfacique individuelle inférieure à 250 Watts/m², caractérisé en ce qu'il comporte une housse thermiquement isolante délimitant avec ledit radiateur une zone intérieure isotherme dans laquelle le contrôle thermique s'effectue par radiation, ledit accumulateur et ledit équipement peu dissipatif étant agencés dans ladite housse thermiquement isolante, et en ce que ledit accumulateur présente une plage de fonctionnement comprise entre 0°C et 50°C et, de préférence, entre 10°C et 30°C.

Avantageusement, la mise en place d'une unique housse définissant une unique zone thermique qui comprend à la fois les accumulateurs et les équipements peu dissipatifs réduit le temps et les coûts de conception du satellite.

Avantageusement, la consommation électrique nécessaire pour chauffer les équipements contenus dans la housse est réduite par rapport à la consommation électrique de ces mêmes équipements placés dans plusieurs zones isothermes.

Selon un mode de réalisation particulier, l'accumulateur est un accumulateur Lithium et, en particulier, un accumulateur Lithium-Ion.

Selon un mode de réalisation particulier, l'équipement peu dissipatif comprend un système de stockage et de distribution d'ergol.

Avantageusement, le montage de la zone intérieure isotherme (qui comprend également la propulsion) est facilité. En effet, cette zone intérieure isotherme contient toutes les conduites reliant les réservoirs, les valves et les moteurs. Les conduites n'ont donc plus besoin d'être enrubannées thermiquement. La housse permet de recouvrir d'un seul coup et très rapidement l'ensemble des petits équipements du système de stockage et de distribution.

Avantageusement, cette zone intérieure isotherme présente également un montage plus flexible que l'ancienne zone de propulsion. En effet, il est, par exemple, possible de modifier la taille d'un réservoir, de changer le trajet d'une conduite de distribution d'ergol sans avoir à remonter les chaufferettes, les bandes en aluminium et le matelas super-isolant.

Avantageusement, comme le système de stockage et de distribution ne dissipe pas de chaleur, il peut être ajouté à la zone isotherme contenant les accumulateurs sans avoir à accroître la surface de dissipation des radiateurs de cette zone.

Avantageusement, les équipements contenus dans la housse sont des équipements qui existent dans tous les satellites et qui forment avec la housse, une base standard à laquelle il sera ajouté des équipements dont la taille varie en fonction des besoins des missions satellite, tels que par exemple la charge utile, l'ordinateur de bord, etc.

Selon un mode de réalisation particulier, ledit système de stockage et de distribution comprend au moins un équipement parmi un réservoir, des conduites de distribution, des valves, des filtres et une partie de tuyères.

Par ailleurs, en référence à la figure 1B, les roues de réaction 8 sont généralement reliées thermiquement à un radiateur par un lien thermique 37 de type caloduc ou tresse métallique. Ce lien thermique est fixé manuellement à la roue de réaction et au radiateur. Cette fixation est longue à installer. De plus, lorsque, au cours de la conception du satellite, on souhaite modifier l'emplacement ou l'orientation des roues de réaction 8 à l'intérieur du satellite, le lien thermique 37 doit être déposé et reposé à un endroit différent ou adapté en longueur. Ce travail, réalisé manuellement, est également long et donc coûteux.

En conséquence, selon un second mode de réalisation, ledit équipement peu dissipatif comprend au moins une roue de réaction.

Avantageusement, selon ce second mode de réalisation, il n'est plus nécessaire de fixer un lien thermique entre les roues de réaction et les radiateurs. Les roues de réaction peuvent librement rayonner dans la première zone isotherme. Cette disposition facilite le montage du satellite.

Cette disposition autorise également une plus grande flexibilité lors de la conception du satellite puisque les roues de réaction peuvent être facilement déplacées dans la première zone isotherme ou orientées différemment pour suivre l'évolution des demandes du client.

Avantageusement, comme les roues de réaction dissipent peu de chaleur, ces équipements peu dissipatifs peuvent être ajoutés à la zone isotherme contenant les accumulateurs sans avoir à accroître sensiblement la surface de dissipation des radiateurs de cette zone.

Avantageusement, le satellite selon le second mode de réalisation permet d'éviter la fixation du lien thermique entre les roues de réaction et les radiateurs et permet de réduire le temps de fabrication et les coûts de fabrication d'un satellite.

Selon un mode de réalisation particulier, la housse thermiquement isolante est réalisée dans un matériau souple, de préférence dans un matelas super isolant.

Bien que la housse ait un volume constant, sa souplesse lui permet de s'adapter à différentes formes de structures centrales, à différentes formes d'accumulateurs, à différentes formes de systèmes de stockage et de distribution, à différentes formes d'équipements (par exemple ceux qui sont fixés sur la structure centrale, ou autres) ou à différentes formes de roues de réaction.

Selon un mode de réalisation particulier, le satellite comporte en outre des équipements de chauffage fixés sur ledit radiateur.

Avantageusement, les équipements de chauffage sont directement fixés à la plaque interne des radiateurs. Ils chauffent cette plaque et permettent ainsi de chauffer l'ensemble des équipements contenu dans la housse.

Selon un mode de réalisation particulier, le satellite comporte une structure centrale, au moins un réservoir d'ergol fixé à ladite structure centrale, des conduites de distribution d'ergol fixées au moins en partie sur la structure centrale, des valves montées sur les conduites, et dans lequel la housse thermique isolante comporte un fourreau emmanché sur ladite structure centrale, ledit fourreau contenant ladite structure centrale, ledit réservoir, au moins une partie desdites conduites et lesdites valves.

Avantageusement, la housse peut être facilement emmanchée et retirée en cas de modification du design du satellite.

Avantageusement, la housse peut être fabriquée dans un format standard qui peut s'adapter sur différentes bases de satellite, indépendamment du nombre et de l'encombrement des équipements qu'elle doit entourer. En effet, étant donné sa faible masse, on gagne du temps de montage (sans pour autant alourdir le satellite) à définir une taille standard de housse la plus grande possible (déterminée par le volume le plus important à entourer), utilisable ensuite avec toutes les configurations possibles de satellite.

Selon un mode de réalisation particulier, ledit fourreau présente un bord périphérique fixé sur une portion supérieure du premier radiateur.

Selon un mode de réalisation particulier, le satellite comporte une face anti-Terre supportant la structure centrale et dans lequel la housse thermique isolante comporte une pièce de matériau isolant sensiblement plane recouvrant la face anti-Terre, ladite pièce de matériau isolant étant fixée à une portion inférieure dudit au moins un radiateur de manière à former avec ledit fourreau et ledit au moins un radiateur une enveloppe fermée.
- Selon un mode de réalisation particulier, les équipements du satellite peu dissipatifs dissipent un flux de chaleur inférieur à 40 Watts.

La valeur de 40 Watts est la limite typique de dissipation par radiation (c'est-à-dire sans l'aide d'un caloduc ou sans connexion directe avec un radiateur) pour éviter que les équipements ne soient trop encombrants dans la housse.

L'invention sera mieux comprise à la lecture de la description qui va suivre, donnée uniquement à titre d'exemple et faite en se référant aux figures sur lesquelles :
- la figure 1A est une vue schématique représentant des zones thermiques selon l'état de la technique ;
- la figure 1B est une vue schématique d'un satellite artificiel selon l'état de la technique
- la figure 2 est une vue schématique d'une portion de conduites de distribution d'ergol selon l'état de la technique;
- la figure 3A est une vue schématique représentant des zones thermiques selon un premier mode de réalisation de l'invention ;
- la figure 3B est une vue schématique d'un satellite artificiel selon le premier mode de réalisation de l'invention; et
- la figure 4A est une vue schématique représentant des zones thermiques selon un deuxième mode de réalisation de l'invention ;
- la figure 4B est une vue schématique d'un satellite artificiel selon le deuxième mode de réalisation de l'invention.

La présente invention se situe dans le domaine des satellites artificiels, et en particulier dans le domaine des satellites géostationnaires.

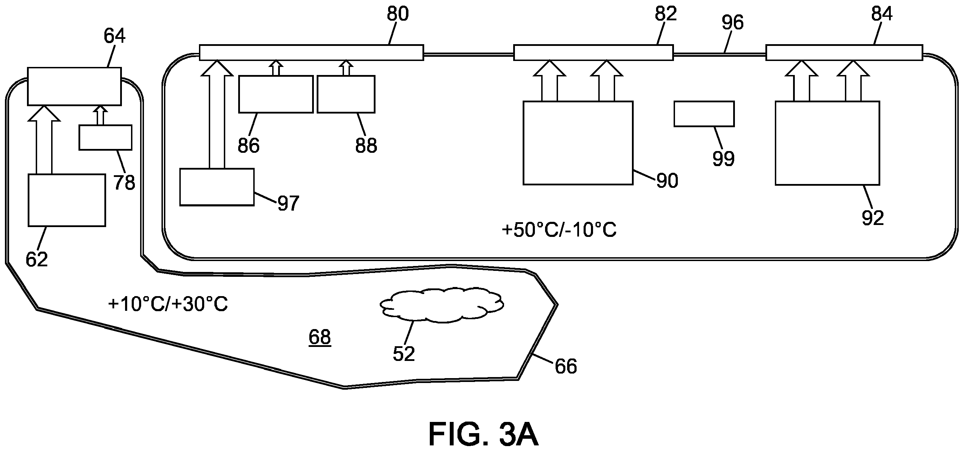

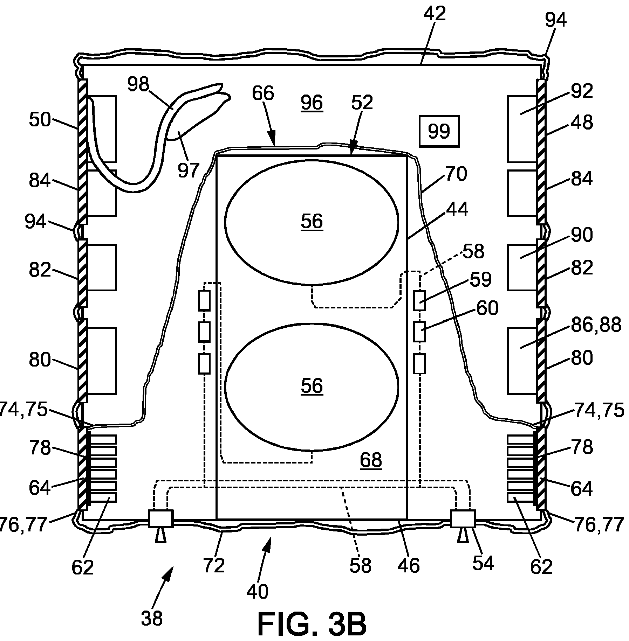

En référence à la figure 3B, le satellite artificiel 38 selon le premier mode de réalisation de l'invention est constitué par une case 40 cubique ou parallélépipédique comprenant une face anti-Terre 46, une structure centrale creuse 44 reposant sur la face anti-Terre 46, une face Terre 42, des faces Est et Ouest portant des équipements (non représentés) et des faces Nord 48 et Sud 50 portant des radiateurs et des équipements.

Le satellite selon l'invention comprend en outre un système de propulsion qui peut être soit chimique, soit plasmique (non représenté sur les figures), soit une utilisation conjointe de ces types de propulsion.

Le système de propulsion comporte un système 52 de stockage et de distribution d'ergol, et deux tuyères 54 ou plus montées sur la face anti-Terre 46.

Le système 52 de stockage et de distribution d'ergol comporte deux réservoirs 56 fixés dans la structure centrale 44, des conduites 58 de distribution d'ergol qui relient chaque réservoir à chaque tuyère, des valves 59 et des filtres 60 montés sur les conduites 58. Ces équipements dissipent individuellement peu de chaleur (typiquement moins de 3 Watts) et possèdent également une densité de puissance surfacique (grandeur représentée par la puissance thermique dissipée par l'équipement rapportée à la surface de dissipation de l'équipement, cette grandeur étant exprimée en Watt/m²) faible, typiquement inférieure à 250 Watts/m². Dans la présente demande de brevet, les équipements qui possèdent une densité de puissance surfacique thermique inférieure à 250 Watts/m² sont appelés équipements peu dissipatifs. Les équipements du système de stockage et de distribution 52 sont donc des équipements peu dissipatifs au sens de la présente demande de brevet. Ces équipements ne nécessitent pas de contrôle thermique conductif car l'évacuation de leur chaleur peut se faire efficacement par échange de chaleur radiatif lorsqu'ils sont placés dans un environnement plus frais. A contrario, les équipements qui, individuellement, possèdent une densité de puissance surfacique individuelle supérieure à 250 Watts/m² nécessitent un contrôle thermique conductif et doivent être installés directement sur un radiateur ou couplé à un radiateur par l'intermédiaire de moyens conductifs tels que des caloducs ou des tresses métalliques.

La face Nord 48 et la face Sud 50 sont chacune pourvues d'un accumulateur 62 propre à dissiper de la chaleur lors de ses opérations de décharge et d'un premier radiateur 64 en contact thermique avec l'accumulateur 62 pour évacuer vers l'espace la chaleur dissipée par l'accumulateur.

Selon l'invention, l'accumulateur 62 est choisi de manière à ce qu'il fonctionne à des températures comprises entre 0°C et 50°C, et de préférence à des températures comprises entre +10°C et +30°C.

Avantageusement, l'accumulateur 62 comprend un ensemble de batteries Lithium-Ion. Ces batteries présentent une température de fonctionnement typiquement comprise entre +10°C et +30°C.

En variante, toute autre batterie ayant une plage de température de fonctionnement compatible avec le système de propulsion c'est-à-dire comprise entre 0°C et +50°C pourrait être utilisée tel que, par exemple, des batteries Lithium-Sulphure.

Avantageusement, selon l'invention, le système 52 de stockage et de distribution d'ergol et les accumulateurs 62 sont disposés dans une housse ou enveloppe 66 thermiquement isolante fixée aux deux premiers radiateurs 64 et délimitant avec ceux-ci une première zone 68 intérieure isotherme.

Cette housse 66 est réalisée dans un matériau isolant. De préférence, ce matériau est souple. Avantageusement, cette housse 66 est réalisée dans un matériau appelé matelas super isolant ou MLI (de l'anglais « Multi Layer Insulation »).

Selon l'exemple de réalisation illustré, cette housse 66 thermiquement isolante comprend un fourreau 70 supérieur et une pièce 72 de matériau isolant inférieure. Le fourreau 70 présente avantageusement la forme d'une cloche. Il est fermé à son extrémité supérieure et évasé à son extrémité inférieure. Le fourreau 70 présente un bord périphérique 74. Une partie de ce bord périphérique est fixée le long d'une portion supérieure 75 des premiers radiateurs 64.

Le fourreau 70 peut facilement être emmanché sur ou retiré de la structure centrale 44. Une fois mis en place, il encercle la partie supérieure de la structure centrale 44, les réservoirs 56, les conduites 58 ainsi que les valves 59 et les filtres 60. Le fourreau 70 peut être composé d'un seul ou d'une pluralité de morceaux d'isolant agencés entre eux afin de former une enceinte étanche.

La pièce de matériau isolant 72 est sensiblement plane. Elle comporte des orifices de passage des tuyères. Le bord périphérique 76 de cette pièce 72 est fixé d'une part, le long d'une portion inférieure 77 des premiers radiateurs, et d'autre part au bord périphérique 74 du fourreau. Ainsi, le fourreau 70, les premiers radiateurs 64 et la pièce de matériau isolant 72 constituent une enveloppe fermée définissant un espace à 3 dimensions appelé dans la présente demande de brevet, première zone isotherme 68. L'évacuation de la chaleur générée dans cette housse 66 se fait par l'intermédiaire des premiers radiateurs 64.

Pour maintenir la température dans la première zone isotherme 68 à la température minimum supportée par les accumulateurs 62, des équipements de chauffage 78, de type chaufferettes, sont agencés dans ladite housse 66. Comme décrit précédemment, cette température minimum est de +10°C dans le cas d'utilisation d'accumulateurs de type Lithium-Ion.

Selon l'exemple de réalisation illustré sur les figures, les faces Nord 48 et Sud 50 sont également pourvues d'un deuxième 80, d'un troisième 82 et d'un quatrième 84 radiateurs sur lesquels l'ordinateur de bord 86, le bloc d'alimentation électrique 88, la charge utile 90 fonctionnant à basse puissance et la charge utile 92 fonctionnant à haute puissance sont respectivement fixés. Des couches 94 de matelas super isolant sont fixées entre chaque radiateur et sur la face Terre 42 de manière à générer avec le fourreau 70 une seconde zone isotherme 96.

Cette seconde zone isotherme 96 comporte également des roues de réaction 97 chacune connectées à un radiateur par un lien thermique 98 de type caloducs ou tresse métallique.

Enfin, cette seconde zone isotherme 96 comprend des équipements de chauffage 99, de type chaufferette pour maintenir cette zone à une température comprise entre -10°C et +50°C.

Selon une variante non représentée, le satellite comporte plus de deux zones isothermes, chacune délimitée par une couche de matelas super isolant et par un radiateur. Par exemple, le satellite peut comporter :
- une première zone isotherme identique à la zone thermique illustrée sur la figure 3B,
- une deuxième zone isotherme maintenue à une température comprise entre +50°C et -20°C ; cette deuxième zone isotherme comportant le deuxième radiateur 80, les roues de réaction 97, l'ordinateur de bord 86, le bloc d'alimentation électrique 88 et un équipement de chauffage 99,
- une troisième zone isotherme maintenue à une température comprise entre -10°C et +50°C, la troisième zone isotherme comportant le troisième radiateur 82, la charge utile fonctionnant à basse puissance 90 et un équipement de chauffage 99,
- une quatrième zone isotherme maintenue à une température comprise entre -20°C et +70°C, la quatrième zone isotherme comportant le quatrième radiateur 84, la charge utile fonctionnant à haute puissance 92 et un équipement de chauffage 99.

Selon une autre variante non représentée et moins avantageuse, un seul ensemble de batterie et un seul premier radiateur 64 est inclut dans la première zone isotherme, l'ensemble de batterie situé de l'autre côté du satellite étant enveloppé dans son propre matelas super isolant.

En variante, les équipements peu dissipatifs comportent un gyroscope.

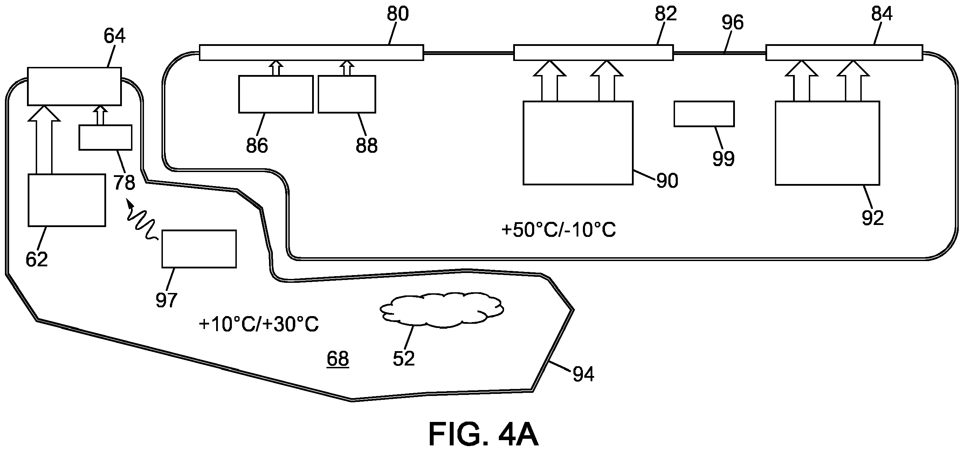

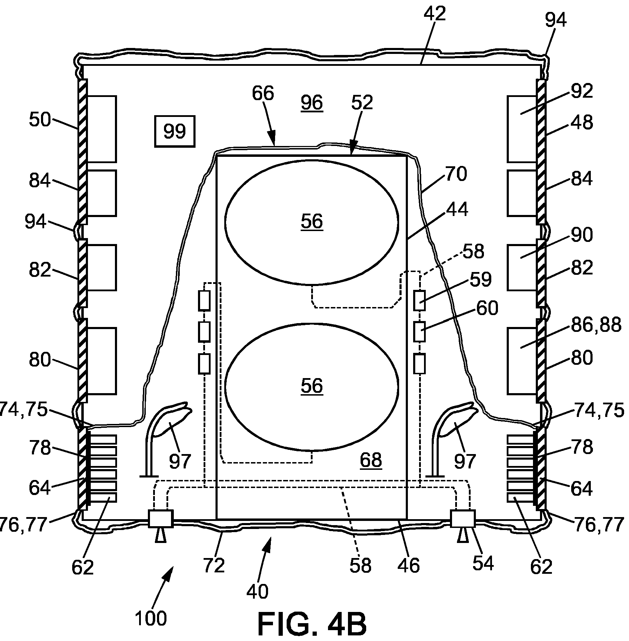

La figure 4B représente un satellite artificiel 100 selon un second mode de réalisation de l'invention. Le satellite artificiel 100 selon le second mode de réalisation est identique au satellite 38 selon le premier mode de réalisation de l'invention à l'exception du fait que la ou les roues de réaction 97 sont placées dans la première zone isotherme 68 plutôt que dans la deuxième zone isotherme 96.

Chaque roue de réaction 97 possède une densité de puissance surfacique thermique inférieure à 250 Watts/m². La ou les roues de réaction font donc partie des équipements peu dissipatifs au sens de la présente demande de brevet.

Ce second mode de réalisation ne sera pas décrit en détail. Les éléments du satellite 100 selon le second mode de réalisation identiques ou similaires aux éléments du satellite 38 selon le premier mode de réalisation comportent les mêmes références et ne seront pas décrits une seconde fois.

Tout comme pour le premier mode de réalisation, le satellite selon le second mode de réalisation peut comporter plusieurs zones isothermes. Il peut, par exemple, comporter quatre zones isothermes comme décrites ci-dessus. Néanmoins, dans ce cas, les roues de réactions 97 sont agencées dans la première zone isotherme.
En variante, les tuyères 54 ou des tuyères supplémentaires sont montées sur une portion inférieure des faces Nord 48, Sud 50, Est ou Ouest. Dans ce cas, ces tuyères 54 et/ou les tuyères supplémentaires sont placées en dessous du fourreau 70 et sont contenues dans la première zone intérieure isotherme 68.

## Revendications

1. Satellite artificiel (38, 100) comprenant au moins un accumulateur (62) propre à dissiper de la chaleur, au moins un radiateur (64) propre à évacuer vers l'espace la chaleur dissipée par l'accumulateur (62), et au moins un équipement (52, 54, 56, 58, 60, 97) dit peu dissipatif qui possède une densité de puissance surfacique individuelle inférieure à 250 Watts/m²,
**caractérisé en ce qu'**il comporte une housse (66) thermiquement isolante délimitant avec ledit radiateur (64) une zone intérieure isotherme (68) dans laquelle le contrôle thermique s'effectue par radiation, ledit accumulateur (62) et ledit équipement peu dissipatif (52, 54, 56, 58, 60, 97) étant agencés dans ladite housse thermiquement isolante (66), et **en ce que** ledit accumulateur (62) présente une plage de fonctionnement comprise entre 0°C et 50°C et, de préférence, entre 10°C et 30°C.

2. Satellite artificiel (38, 100) selon la revendication 1, dans lequel ledit accumulateur (62) est un accumulateur Lithium et, en particulier, un accumulateur Lithium-Ion.

3. Satellite artificiel (38, 100) selon l'une quelconque des revendications précédentes, dans lequel ledit équipement peu dissipatif (52, 54, 56, 58, 60,97) comprend un système de stockage et de distribution d'ergol.

4. Satellite artificiel (38, 100) selon la revendication 3, dans lequel ledit système de stockage et de distribution comprend au moins un équipement parmi un réservoir (56), des conduites de distribution (58), des valves (59), des filtres (60) et une partie de tuyères (54).

5. Satellite artificiel (38, 100) selon l'une quelconque des revendications précédentes, dans lequel ledit équipement peu dissipatif (52, 54, 56, 58, 60, 97) comprend au moins une roue de réaction (97).

6. Satellite artificiel (38, 100) selon l'une quelconque des revendications précédentes, dans lequel la housse thermiquement isolante (66) est réalisée dans un matériau souple, de préférence dans un matelas super isolant.

7. Satellite artificiel (38, 100) selon l'une quelconque des revendications précédentes, qui comporte en outre des équipements de chauffage (78) fixés sur ledit radiateur (64).

8. Satellite artificiel (38, 100) selon l'une quelconque des revendications précédentes, qui comporte une structure centrale (44), au moins un réservoir d'ergol (56) fixé à ladite structure centrale (44), des conduites (58) de distribution d'ergol fixées au moins en partie sur la structure centrale (44), des valves (59) montées sur les conduites (58), et dans lequel la housse thermique isolante (66) comporte un fourreau (70) emmanché sur ladite structure centrale (44), ledit fourreau (70) contenant ladite structure centrale (44), ledit réservoir (56), au moins une partie desdites conduites (58) et lesdites valves (59).

9. Satellite artificiel (38, 100) selon la revendication 8, dans lequel ledit fourreau (70) présente un bord périphérique (74) fixé sur une portion supérieure (75) du premier radiateur.

10. Satellite artificiel (38, 100) selon la revendication 9, qui comporte une face anti-Terre (46) supportant la structure centrale (44) et dans lequel la housse thermique isolante (66) comporte une pièce (72) de matériau isolant sensiblement plane recouvrant la face anti-Terre (46), ladite pièce (72) de matériau isolant étant fixée à une portion inférieure (77) dudit au moins un radiateur de manière à former avec ledit fourreau (70) et ledit au moins un radiateur (64) une enveloppe fermée.

11. Satellite artificiel (38, 100) selon l'une quelconque des revendications précédentes, dans lequel les équipements du satellite peu dissipatifs dissipent un flux de chaleur inférieur à 40 Watts.

## Patentansprüche

1. Künstlicher Satellit (38, 100), aufweisend mindestens einen geeigneten Akkumulator (62) zum Dissipieren von Wärme, mindestens einen geeigneten Radiator (64) zum Abführen der von dem Akkumulator (62) dissipierten Wärme Richtung Weltraum und mindestens eine sogenannte wenig dissipative Vorrichtung (52, 54, 56, 58, 60, 97), die eine flächenbezogene Eigenleistungsdichte von weniger als 250 Watt/m² besitzt,
**dadurch gekennzeichnet, dass** er eine thermisch isolierende Abdeckung (66) aufweist, die gemeinsam mit dem Radiator (64) eine isotherme Innenzone (68) begrenzt, in welcher die thermische Steuerung durch Radiation erfolgt, wobei der Akkumulator (62) und die wenig dissipative Vorrichtung (52, 54, 56, 58, 60, 97) in der thermisch isolierenden Abdeckung (66) angeordnet sind, und dadurch, dass der Akkumulator (62) einen Arbeitsbereich zwischen 0°C und 50°C und bevorzugt zwischen 10°C und 30°C hat.

2. Künstlicher Satellit (38, 100) nach Anspruch 1, wobei der Akkumulator (62) ein Lithium-Akkumulator und insbesondere ein Lithiumion-Akkumulator ist.

3. Künstlicher Satellit (38, 100) nach einem der vorstehenden Ansprüche, wobei die wenig dissipative Vorrichtung (52, 54, 56, 58, 60, 97) ein Speicher- und Verteilungssystem zum Speichern und Verteilen von Treibstoff aufweist.

4. Künstlicher Satellit (38, 100) nach Anspruch 3, wobei das Speicher- und Verteilungssystem mindestens eine der folgenden Vorrichtungen aufweist: einen Behälter (56), Verteilungsleitungen (58), Ventile (59), Filter (60) und einen Teil von Düsen (54).

5. Künstlicher Satellit (38, 100) nach einem der vorstehenden Ansprüche, wobei die wenig dissipative Vorrichtung (52, 54, 56, 58, 60, 97) mindestens ein Reaktionsrad (97) aufweist.

6. Künstlicher Satellit (38, 100) nach einem der vorstehenden Ansprüche, wobei die thermisch isolierende Abdeckung (66) aus einem flexiblen Material, vorzugsweise aus einer superisolierenden Matte, hergestellt ist.

7. Künstlicher Satellit (38, 100) nach einem der vorstehenden Ansprüche, der desweiteren an dem Radiator (64) angebrachte Heizeinrichtungen (78) aufweist.

8. Künstlicher Satellit (38, 100) nach einem der vorstehenden Ansprüche, der eine zentrale Struktur (44), mindestens einen an der zentralen Struktur (44) angebrachten Treibstoffbehälter (56), zumindest teilweise an der zentralen Struktur (44) angebrachte Treibstoffverteilungsleitungen (58), an den Leitungen (58) angebrachte Ventile (59) aufweist, und wobei die thermisch isolierende Abdeckung (66) eine die zentrale Struktur (44) überdeckende Hülle (70) aufweist, wobei die Hülle (70) die zentrale Struktur (44), den Behälter (56), mindestens einen Teil der Leitungen (58) und die Ventile (59) enthält.

9. Künstlicher Satellit (38, 100) nach Anspruch 8, wobei die Hülle (70) eine Randkante (74) aufweist, die an einem oberen Abschnitt (75) des ersten Radiators befestigt ist.

10. Künstlicher Satellit (38, 100) nach Anspruch 9, der eine erdabgewandte Fläche (46) aufweist, die die zentrale Struktur (44) trägt, und wobei die thermisch isolierende Abdeckung (66) ein im Wesentlichen flaches Stück (72) Isolationsmaterial aufweist, das die erdabgewandte Fläche (46) bedeckt, wobei das Stück (72) Isolationsmaterial an einem unteren Abschnitt (77) des mindestens einen Radiators befestigt ist, derart, um mit der Hülle (70) und dem mindestens einen Radiator (46) eine geschlossene Ummantelung zu bilden.

11. Künstlicher Satellit (38, 100) nach einem der vorstehenden Ansprüche, wobei die wenig dissipativen Vorrichtungen des Satelliten einen Wärmefluss von weniger als 40 Watt dissipieren.

## Claims

1. An artificial satellite (38, 100) comprising at least one battery pack (62) capable of dissipating heat, at least one radiator (64) capable of conveying the heat dissipated by the battery pack (62) into space, and at least one so-called low-dissipation equipment item (52, 54, 56, 58, 60, 97) having an individual power flux density of less than 250 watts/m²,
**characterized in that** it comprises a thermally insulating cover (66) delimiting, together with said radiator (64), an interior isothermal zone (68) in which thermal control takes place by radiation, said battery pack (62) and said low-dissipation equipment (52, 54, 56, 58, 60, 97) being arranged in said thermally insulating cover (66), and said battery pack (62) has an operating range of between 0°C and 50°C and preferably of between 10°C and 30 °C.

2. An artificial satellite (38, 100) according to claim 1 in which said battery pack (62) is a Lithium battery pack and in particular a Lithium-Ion battery pack.

3. An artificial satellite (38, 100) according to any one of the foregoing claims, in which said low-dissipation equipment (52, 54, 56, 58, 60, 97) comprises a propellant storage and distribution system.

4. An artificial satellite (38, 100) according to claim 3, in which said propellant storage and distribution system comprises at least one equipment item from among a tank (56), distribution pipes (58), valves (59), filters (60), and a portion of nozzles (54).

5. An artificial satellite (38, 100) according to any one of the foregoing claims, in which said low-dissipation equipment (52, 54, 56, 58, 60, 97) comprises at least one reaction wheel (97).

6. An artificial satellite (38, 100) according to any one of the foregoing claims, in which the thermally insulating cover (66) is made of a flexible material, preferably a super-insulating blanket.

7. An artificial satellite (38, 100) according to any one of the foregoing claims, which furthermore comprises heating equipment (78) attached to said radiator (64).

8. An artificial satellite (38, 100) according to any one of the foregoing claims, which comprises a central structure (44), at least one propellant tank (56) secured to said central structure (44), propellant distribution pipes (58) attached at least in part to the central structure (44), and valves (59) installed on the pipes (58), and in which the insulating thermal cover (66) comprises a sheath (70) slipped over said central structure (44), said sheath (70) containing said central structure (44), said tank (56), at least a portion of said pipes (58), and said valves (59).

9. An artificial satellite (38, 100) according to claim 8, in which said sheath (70) has a peripheral edge (74) attached to an upper portion (75) of the first radiator.

10. An artificial satellite (38, 100) according to claim 9, which comprises an anti-Earth face (46) supporting the central structure (44) and in which the thermal insulating cover (66) comprises a substantially flat part (72) of insulating material covering the anti-Earth face (46), said part (72) made of insulating material being secured to a lower portion (77) of said at least one radiator so as to form, together with said sheath (70) and said at least one radiator (64), a closed envelope.

11. An artificial satellite (38, 100) according to any one of the foregoing claims, in which the low-dissipation equipment items of the satellite dissipate a heat flux of less than 40 watts.
